# EUROPEAN PATENT APPLICATION

(11) **EP 4 329 020 A1**
(43) Date of publication of application: **28.02.2024**
(21) Application number: 23186640.1
(22) Date of filing: 20.07.2023
(51) Int. Cl.: H01M 8/021, H01M 8/0215, H01M 8/0217, H01M 8/0228, H01M 8/2432, C25B 9/65, C25B 9/75, H01M 8/12

(54) **INTERCONNECTOR FOR SOLID OXIDE ELECTROCHEMICAL CELL STACK AND SOLID OXIDE ELECTROCHEMICAL CELL STACK**

(30) Priority: 25.08.2022 JP 2022134184
(71) Applicant: Toshiba Energy Systems & Solutions Corporation, Saiwai-ku Kawasaki-shi Kanagawa (JP)
(72) Inventor: KOBAYASHI, Shohei, Kawasaki-shi, Kanagawa (JP); KAMEDA, Tsuneji, Minato-ku, Tokyo (JP); ASAYAMA, Masahiro, Kawasaki-shi, Kanagawa (JP); OSADA, Norikazu, Kawasaki-shi, Kanagawa (JP); INUZUKA, Riko, Kawasaki-shi, Kanagawa (JP)
(74) Representative: Hoffmann Eitle

(57) **Abstract**

An interconnector for a solid oxide electrochemical cell stack of at least one arrangement includes a metal base that contains an iron-base alloy containing chromium, a protective film provided on a surface of the metal base, and an interlayer provided between the metal base and the protective film arranged to relieve stress.

## Description

### FIELD

Arrangements disclosed herein relate generally to interconnectors for a solid oxide electrochemical cell stack and a solid oxide electrochemical cell stack.

### BACKGROUND

Hydrogen is one of the new energy sources for a decarbonized society. As a utilization field of hydrogen, fuel cells that convert chemical energy to electric energy by an electrochemical reaction between hydrogen and oxygen attract attention. Such fuel cells have high energy utilization efficiency and are developed as large-scale dispersed power sources, domestic power sources, and mobile power sources, for example. The fuel cells are categorized related to operating temperature, component materials, and kinds of fuels. The fuel cells are classified according to the electrolyte materials: solid polymer, phosphate, molten carbonate, and solid oxide.

Solid oxide fuel cells (SOEC) are attracting attention, for example, from the perspective of efficiency. On the other hand, it is necessary to transport hydrogen to hydrogen systems including the fuel cells because hydrogen does not exist in nature. Electrolysis cells can produce hydrogen in the hydrogen systems by an aqueous electrolytic reaction, which is the reverse reaction of the fuel cells. The hydrogen production reactions may use alkaline water electrolysis, solid polymer, and solid oxide. For example, solid oxide electrolysis cells (SOECs), which electrolyze water in the state of high-temperature steam, are attracting attention from the perspective of the highest efficiency of hydrogen production. The mechanism of SOECs is the reverse of that of SOFCs. SOECs have an electrolyte comprising solid oxide as well as SOFCs.

Solid oxide electrochemical cells are attracting attention because they achieve high efficiency of electrochemical reactions of both fuel cells and electrolysis cells. The solid oxide electrochemical cells, which are used for SOFC and SOEC, have layered products of oxide electrodes (air electrodes), solid oxide electrolyte layers, and hydrogen electrodes (fuel electrodes). Large-capacity electrochemical cell stacks made of a stacked plurality of such electrochemical cells through interconnectors are used. The interconnectors for solid oxide electrochemical cell stacks made from high Cr steel with chromium (Cr) content of 15 mass% or more, which is typically used for heat-resistant material, is used because of heat resistance requirements. Oxide layers made from mainly chromium oxide (Cr₂O₃) are formed on the high Cr steel surface at a high temperature.

Performances of the solid oxide electrochemical cell stacks deteriorate due to adherence of Cr elements evaporating from Cr₂O₃ to electrodes of the solid oxide electrochemical cell stacks under the operating environment by using the high Cr steel for the interconnectors of the solid oxide electrochemical cell stacks. Materials for the interconnectors of the solid oxide electrochemical cell stacks are widely explored to improve their performances. High Cr steel covered with durum protective films may inhibit Cr scatter. The protective films need heat resistance, electric conductivity, adhesiveness, and so on.

For example, spinel oxide and perovskite oxide are possible candidates for the protective films. The perovskite oxide has high electric conductivity. A large thermally expandable difference between the perovskite oxide and basal panels can make the oxide layers break away. On the other hand, the spinel oxide, whose thermally expandable difference from the basal panels is small, needs twists. Composition adjustments of the spinel oxide to decrease the thermally expandable difference can improve the adhesiveness. However, the composition adjustments may make variations of composition within the interconnectors plane and that from lot to lot. In addition, methods for coatings to obtain the desired composition are limited.

### SUMMARY

A problem to be solved by the present invention is to provide an interconnector for a solid oxide electrochemical cell stack capable of suppressing peeling a protective film and so on provided on high Cr steel and a solid oxide electrochemical cell stack.

According to the aspects of the present invention, there is provided an interconnector for a solid oxide electrochemical cell stack capable of suppressing peeling a protective film and so on provided on high Cr steel and a solid oxide electrochemical cell stack.

### BRIEF DESCRIPTION OF THE DRAWINGS

FIG. 1 is a cross-sectional view illustrating an interconnector for a solid oxide electrochemical cell stack of at least one arrangement.
FIG. 2 is a cross-sectional view illustrating a solid oxide electrochemical cell stack of at least one arrangement.
FIG. 3 is a close-up picture of an interconnector for a solid-state electrochemical cell stack after high-temperature exposure according to Comparative Example 1.
FIG. 4 is a close-up picture of an interconnector for a solid-state electrochemical cell stack after high-temperature exposure according to Example 1.

### DETAILED DESCRIPTION

An interconnector for a solid oxide electrochemical cell stack of at least one arrangement includes a metal base that contains an iron-base alloy containing chromium, a protective film disposed on a surface of the metal base, and an interlayer disposed between the metal base and the protective film for relieving stress.

Hereinafter, an interconnector for a solid oxide electrochemical cell stack and a solid oxide electrochemical cell stack of at least one arrangement will be described with reference to the drawings. In each arrangement presented below, the same codes are given to substantially the same components to partially omit their explanations in some cases. The drawings are schematically illustrated, in which the relationship between thickness and plane dimensions, a ratio between the thickness of parts, and the like may differ from actual ones.

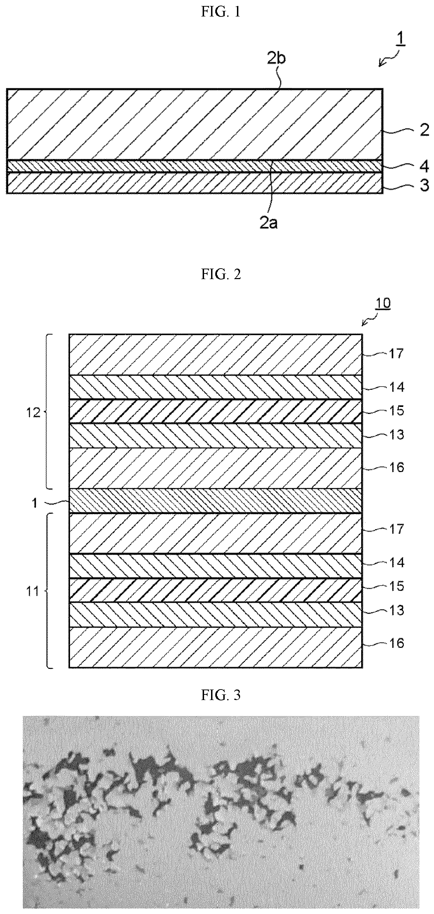

FIG.1 illustrates a cross-section of an interconnector for a solid oxide electrochemical cell stack according to the first arrangement. An interconnector 1 illustrated in FIG. 1 includes a metal base 2 having a first surface 2a and a second surface 2b. The first surface 2a of the metal base 2 is provided on an oxygen electrode (air electrode) side and is exposed to oxygen-containing atmospheres, for example, air. The second surface 2b of the metal base 2 is provided on a hydrogen electrode (fuel electrode) side and is exposed to hydrogen-containing atmospheres. The atmospheres flowing on the second surface 2b are not limited to hydrogen and methanol (CH₃OH) or other substances may flow in the SOFC. Thus, the second surface 2b is exposed to hydrogen-element-containing atmospheres. The atmospheres flowing on the first surface 2a are not limited to the air and oxygen or nothing may flow in the SOEC. Thus, the first surface 2a is exposed to oxygen-containing atmospheres. A protective film 3 is provided on the first surface 2a of the metal base 2. The protective film 3 may be provided on each of the first surface 2a and the second surface 2b of the metal base 2.

The interconnector 1 illustrated in FIG. 1 is used, for example, in a solid oxide electrochemical cell stack 10 illustrated in FIG. 2. The solid oxide electrochemical cell stack 10 in FIG. 2 includes a first electrochemical cell 11 and a second electrochemical cell 12 that are stacked via the interconnector 1. FIG. 2 illustrates the structure of stacking the first electrochemical cell 11 and the second electrochemical cell 12. However, the number of the electrochemical cells stacked is not limited and more than three electrochemical cells can be stacked. The electrochemical cells are electrically connected to each other through the interconnectors that are provided between neighboring electrochemical cells when more than three electrochemical cells are staked.

Both the first electrochemical cell 11 and the second electrochemical cell 12 have the same configuration including a first electrode 13 functioning as a hydrogen electrode (fuel electrode), a second electrode 14 functioning as an oxygen electrode (air electrode), and a solid oxide electrolyte 15 provided between the first electrode 13 and the second electrode 14. Each of the first and the second electrodes 13 and 14 are made of porous electric conductors. The solid oxide electrolyte 15 may be made of durum solid oxide electrolytes, which are ion conductors. The electrolytes allow ions, for example oxygen ions, to pass but not electricity and air. A porous first current corrector 16 can be provided between the first electrode 13 and the interconnector 1 as needed. A porous second current corrector 17 can be provided between the second electrode 14 and the interconnector 1 as needed. The first current corrector 16 and the second current corrector 17 are the members that allow reactant gas to pass and improve electric connections between the first electrochemical cell 11, the second electrochemical cell 12, and the interconnector 1.

Although omitted in FIG. 2, gas flow paths are provided around the first electrochemical cell 11 and the second electrochemical cell 12. In other words, supply gas according to the application of the electrochemical cell stack 10 is supplied to the first and the second electrodes 13 and 14 respectively through a part of the gas flow path. Emission gas generated and ejected at each of the first and the second electrodes 13 and 14 is ejected from the first and the second electrochemical cells 11 and 12 through other part of the gas flow paths. The gas supplied to the first electrode 13 and the second electrode 14, and an atmosphere around these electrodes are separated by the durum solid oxide electrolyte 15 and the interconnector 1. Reducing gas including hydrogen (H₂), methanol (CH₃OH), or so on is supplied to the first electrode 13 as the hydrogen electrode (fuel electrode), and oxidizing gas including air, oxygen, or so on is supplied to the second electrode 14 as the oxygen electrode (air electrode) for the electrochemical cell stack 10 used as fuel cells including SOFC. Steam (H₂O) is supplied to the first electrode 13 as the hydrogen electrode for the electrochemical cell stack 10 used as electrolytic cells including SOEC applying a high-temperature steam electrolysis method.

The interconnector 1 in FIG. 1 is provided between the first and the second electrochemical cells 11 and 12 of the electrochemical cell stack 10 in FIG. 2. The interconnector 1 includes the first surface 2a of the metal base 2 provided on the second electrode 14 side as the oxygen electrode. The interconnector 1 includes the second surface 2b of the metal base 2 provided on the first electrode 13 side as the hydrogen electrode. In FIG. 2, the first surface 2a of the metal base 2 is provided on the second electrode 14 side of the first electrochemical cell 11 and the second surface 2b of the metal base 2 is provided on the first electrode 13 side of the second electrochemical cell 12. Thus, the first surface 2a of the metal base 2 is exposed to an atmosphere containing air like oxygen supplied to the second electrode 14 as the air electrode. The second surface 2b of the metal base 2 is exposed to hydrogen or an atmosphere containing hydrogen and steam supplied to the first electrode 13 as the hydrogen electrode. The atmosphere may include hydrogen ejected from the first electrode 13.

The interconnector 1 of the electrochemical cell stack 10 in FIG. 2 includes iron-base alloys containing chromium (Cr) i.e., stainless steel (SUS). The metal base 2 including ferritic stainless steel, for example, SUS430 whose thermal expansion rates are close to that of the electrochemical cells 11 and 12 applies to the electrochemical cell stack 10. The metal base 2 including the stainless steel may reduce the performance of the electrochemical cell stack 10 by adherence of Cr contained in the metal base 2 to the second electrode 14. This adherence may occur due to Cr vaporizing by a reaction with oxygen or hydrogen at a high-temperature range, which is the operation temperature of the SOFC or SOEC, for example, 600∼1000 degrees. The interconnector 1 includes the protective film 3 covering at least the first surface 2a of the metal base 2 to inhibit the chromium from vaporizing and diffusion.

The protective film 3 preferably includes spinel oxide or perovskite oxide being conductive at the operation temperature of the SOFC or the SOEC. The spinel oxide is oxide expressed as AB₂O₄ (A and B are cationic elements identical or different, which may be metal elements). The perovskite oxide is oxide expressed as ABOs (A and B are cationic elements identical or different, which may be metal elements). The spinel oxide and the perovskite oxide are suitable for the protective film 3 due to their conductivities at the operation temperature of the SOFC or the SOEC.

Metal elements contained in the spinel oxide or the perovskite oxide may be at least one of cobalt (Co), nickel (Ni), manganese (Mn), copper (Cu), chromium (Cr), zinc (Zn), aluminum (Al), titanium (Ti), lanthanum (La), or strontium (Sr). The spinel oxide including Co is effective for the protective film 3. Co can form the spinel oxide expressed as Co₃O₄ because Co can be both A and B site elements of the spinel oxide. In addition, at least one of Ni, Mn, Cu, Fe, Cr, Zn, Al, or Ti added such a spinel oxide including Co may improve conductivity and thermal expansion rate discrepancy mitigation. The spinel oxide including Fe, Ni, Mn and so on instead of Co can be used for the protective film 3.

The perovskite oxide is oxide including at least one of Co, La, or Sr, for example, LaCoO₃, SrCoO₃, and (La, Sr)CoO₃. Materials at least one of Ni, Mn, Cu, Fe, Cr, Zn, Al, or Ti added such a perovskite oxide, for example, La(Co, Fe)O₃, Sr(Co, Fe)O₃, and (La, Sr)(Co, Fe)O₃ may be the perovskite oxide. Mn, Ni, or so on instead of Fe added the perovskite oxide may be the perovskite oxide. the protective film 3 may include the perovskite oxide including Mn, Fe, Ni, or so on instead of Co, for example, SrMnO₃, SrFeO₃, and SrNiO₃. The protective film 3 may include metal elements as described above added the perovskite oxide.

As mentioned above, Cr elements may vaporize by a reaction with oxygen or hydrogen at the operation temperature of the solid oxide electrochemical cells 11 and 12, and then the Cr vapor may reduce the performance of them. Covering the metal base 2 with the protective film 3 improves the performance as well as inhibiting cracking and spalling of the protective film 3. Stress on the protective film 3 generated by thermal expansion difference between the metal base 2 and the protective film 3 may cause such cracking and spalling during temperature rise to and temperature fall from operation temperature. Stress on the protective film 3 generated by volume contraction or expansion by chemical reactions, for example, oxidation after coating the protective film 3 may cause such cracking and spalling. An interlayer 4 is provided between the metal base 2 and the protective film 3 to relieve the stress. The interlayer 4 relieves such stress to inhibit the cracking and the spalling of the protective film 3.

The stress relaxation by the interlayer 4, and the inhibition of the cracking and the spalling by the relaxation are described below. Here we focus on self-diffusion coefficients and Young's moduli. The self-diffusion coefficient is a diffusion coefficient of an element in a base material diffusing through the base material. For example, Fe or Cr elements diffuse through the high Cr steel for Fe-Cr-based high Cr steel used for the interconnector 1 in at least one arrangement. The self-diffusion coefficients of the Fe and Cr elements in the high Cr steel are about 2 to 3 × 10⁻¹⁷ m²/s at 700 degrees. The larger the self-diffusion coefficients materials have, the larger stress the materials can relieve by their deformation through base materials due to the diffusion of elements under the stress. Thus, the interlayer 4 having a larger self-diffusion coefficient of the elements in the interlayer 4 than that of the elements, which may be Fe or Cr, in the metal base 2 exhibits stress relaxation.

The stress relaxation is provided when the interlayer 4 has the larger self-diffusion coefficient of the elements in the interlayer 4 than that of the elements in the metal base 2, which may be Fe or Cr. The self-diffusion coefficient of the elements in the interlayer 4 is preferred to be one or more orders of magnitude larger than that of the elements in the metal base 2 although they vary depending on the materials of the metal base 2, film thickness of the protective film 3, and so on. The stress relaxation by the interlayer 4 can be obtained reproducibly by using the interlayer 4 having such self-diffusion coefficient. These enable inhibition of the cracking and the spalling of the protective film 3.

The interlayer 4 may include Cu, Au, or Ag having larger self-diffusion coefficients than that of the metal base 2 materials, which may be Fe or Cr. At about 700 degrees, the self-diffusion coefficient of Cu is 10⁻¹⁶ to 10⁻¹⁵ m²/s, that of Ag is 10⁻¹⁵ to 10⁻¹⁴ m²/s, and that of Au is 10⁻¹⁵ to 10⁻¹⁴ m²/s while that of Fe and Cr are 2 to 3 × 10⁻¹⁷ m²/s. Cu, Ag, and Au can be used as single-component metals for the interlayer 4. The interlayer 4 may include alloys including at least one of them. In addition, self-diffusion coefficients of materials having body-centered cubic (bcc) structure, which is not close-packed structure, are larger than these of materials having face-centered cubic (fcc) structure, which has a close-packed structure. Thus, the interlayer 4 materials can include such materials having the bcc structure for the metal base 2 materials having the fcc structure.

On the other hand, the Young's moduli show degrees of deformability due to the stress. Materials having the small Young' moduli may be greatly deformed by a small stress. In other words, the smaller Young's moduli materials have, the larger deformation the materials cause with the stress and relieve the stress. The materials with the smaller Young's moduli in the interlayer 4 than these of the metal base 2 relieve the stress by deformation of the interlayer 4. The interlayer 4 reduces the stress between the metal base 2 and the protective film 3. This inhibits cracking and spalling.

A Young's modulus of high Cr steel, for example, SUS430 is 201 GPa. Materials with Young's moduli that are smaller than that of the metal base 2 including such high Cr steel may be metals including at least a metal element including Mg, Al, Cu, Pd, Au, Ag, Zn, or Ti. The metal elements can be used for the interlayer 4 as single-component metals or alloys including at least one of them. For example, the Young's moduli of Al, Cu, Pd, Au, Ag, Zn, and Ti are 70.3 GPa, 129.8 GPa, 16.1 GPa, 78 GPa, 827 GPa, 48 GPa, and 107 GPa respectively. The alloys may be Mg alloys, Al alloys, and brasses (Cu-Zn alloys) whose Young's moduli are 45 GPa, 69 to 76 GPa, and 103 GPa respectively.

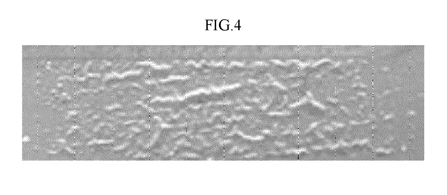

Surfaces of the interconnector 1 where the protective film 3 is formed on the metal base 2 through the interlayer 4 may wrinkle due to deforming of the interlayer 4. The wrinkles, which may be caused by the stress, indicate that the interlayer 4 relieved the stress. Note that the wrinkles on the surfaces of the interconnector 1 indicate small uneven deformations on them, which are shown as an example in a close-up picture of FIG. 4, the result of Example 1 described below.

The thickness of the interlayer 4 is preferably 0.3 *µ*m or thicker and the thin interlayer 4 may relieve the stress deficiently due to difficulties in uniform formation of the interlayer 4. On the other hand, this thickness is preferably 10 *µ*m or thinner and the thick interlayer 4 may reduce the reliability of the protective film 3 due to large deformation of the interlayer 4, which depends on component materials of the interlayer 4. The thickness of the protective film 3 is preferably 0.3 *µ*m or thicker to form uniformly and inhibit Cr diffusion. Although the thickness of the protective film 3 depends on abilities of the interlayer 4 to relieve the stress, the thick protective film 3 may cause cracking and spalling. Thus, the thickness of the protective film 3 is preferably 20 *µ*m or thinner.

Methods of formatting the protective film 3 and the interlayer 4 are not limited to particular methods, which may be electrolytic plating process, non-electrolytic plating process, electrodeposition process, spin coating process, dip coating process, or sol-gel process. The protective film 3 can be formed by oxidation after forming metal films for the protective film 3 including the oxide described above. The interlayer 4 can be formed by forming metal films or reduction after forming oxide films. The interconnector 1 with the protective film 3 can undergo such oxidation and reduction in a stand-alone state, or embedded state in cell stacks or modules.

The arrangement described above is about SOFC and SOEC using the solid oxide electrochemical cell and the cell stack 10 accumulated the cells. However, they may be used for CO₂ electrolysis apparatus or so on.

### EXAMPLES

Next, concrete examples of the interconnector of the arrangement and evaluation results thereof are described.

### (Comparative Example 1)

A substrate made of SUS430, ferritic stainless steel, was prepared as a metal base. This SUS substrate was immersed in Co plating bath to form a Co film with 4 *µ*m thickness by electrolytic plating. Then, the SUS substrate with Co plating film was exposed to the atmosphere at 700 degrees to oxidize the Co plating film. The Co film after the oxidation was confirmed to be a Co oxide film mainly including Co-spinel oxide expressed as Co₃O₄. This SUS substrate with the Co oxide protective film was evaluated by an eternal observation. FIG. 3 is a close-up picture showing the appearance of the SUS substrate with the Co oxide protective film. FIG.3 shows spalling on the surface of the SUS substrate with the Co oxide protective film without any interlayer.

### (Example 1)

A substrate made of SUS430, ferritic stainless steel, was prepared as a metal base. This SUS substrate was immersed in Ag plating bath for electrolytic plating, and then it was immersed in Co plating bath for electrolytic plating. In this way, a Ag film with 1 *µ*m thickness and a Co film with 4 *µ*m thickness were formed in this order on the surface of the SUS substrate. Next, the SUS substrate with the Ag and Co films was exposed to the atmosphere at 700 degrees to oxidize the outermost Co plating film. The Co film after oxidation was confirmed to be a Co oxide film including mainly Co-spinel oxide expressed as Co₃O₄. In addition, the Ag film was confirmed not to be oxidized. This SUS substrate with the Ag interlayer and the Co protective film was evaluated by an external observation. FIG. 4 is the close-up picture showing the appearance of the SUS substrate with the Ag interlayer and the Co protective film. FIG. 4 indicates the surface of the SUS substrate with the Ag interlayer and the Co protective film have no spalling. In addition, FIG. 4 shows wrinkles on the protective film. The wrinkles might be caused by stress between the SUS substrate and the protective film, and the wrinkles inhibited the spalling of the protective film.

As Comparative Example 1 and Example 1 show, the protective film of the SUS substrate without any interlayer has spalling. On the hand, the protective film of the SUS substrate with the interlayer has wrinkles implying relaxation of stress between the SUS substrate and the protective film. Consequently, the reliability of the protective film is improved by inhibiting spalling of the protective film in SUS substrate with the interlayer. Durability of the solid oxide electrochemical cell stack can be enhanced by using an interconnector including such SUS substrate with the interlayer and the protective film.

Note that the above-explained configurations of the arrangements are applicable in combinations and part thereof may be replaced. While certain arrangements of the present invention have been explained, these arrangements have been presented by way of example only, and are not intended to limit the scope of the disclosure. These arrangements may be embodied in a variety of other forms; furthermore, various omissions, substitutions, and changes may be made therein without departing from the spirit of the disclosure. The accompanying claims and their equivalents are intended to cover such forms or modifications as would fall within the scope and spirit of the disclosure.

(Numbered Clauses relating to the arrangements)
1. An interconnector for a solid oxide electrochemical cell stack, the interconnector comprising:
   a metal base including an iron-base alloy containing chromium;
   a protective film disposed on a surface of the metal base; and
   an interlayer disposed between the metal base and the protective film arranged to relieve stress.
2. The interconnector according to clause 1, wherein
   the interlayer includes a material containing an element with a larger self-diffusion coefficient than a self-diffusion coefficient of the iron and the chromium in the metal base.
3. The interconnector according to clause 2, wherein
   the self-diffusion coefficient of the element in the interlayer is one or more orders of magnitude larger than the self-diffusion coefficient of the iron and the chromium in the metal base.
4. The interconnector according to clause 2, wherein
   the interconnector includes the material with a smaller Young's modulus than a Young's modulus of the metal base.
5. The interconnector according to clause 2, wherein
   the interlayer includes a metal material containing at least a metal element selected from the group consisting of Cu, Au, and Ag.
6. The interconnector according to clause 1, wherein
   the interlayer includes a material with a smaller Young's modulus than a Young's modulus of the metal base.
7. The interconnector according to clause 6, wherein
   the interlayer includes a metal material containing at least a metal element selected from the group consisting of Mg, Al, Cu, Pd, Au, Ag, Zn, and Ti.
8. The interconnector according to clause 1, further comprising
   at least one wrinkle on a surface of the interlayer.
9. The interconnector according to clause 1, wherein
   the protective film includes an oxide containing at least one selected from the group consisting of Co, Ni, Mn, Cu, Fe, Cr, and Zn.
10. The interconnector according to clause 1, wherein
   the protective film includes at least one selected from the group consisting of a spinel oxide containing Co and a perovskite oxide containing at least one selected from the group consisting of Co, La, and Sr.
11. The interconnector according to clause 1, wherein
   a thickness of the interlayer is from 0.3 *µ*m to 10 *µ*m.
12. The interconnector according to clause 1, wherein
   a thickness of the protective film is from 0.3 *µ*m to 20 *µ*m.
13. The interconnector according to clause 1, wherein the protective film is disposed on a first surface of the metal base and on a second surface of the metal base, the second surface being opposite to the first surface.
14. A solid oxide electrochemical cell stack comprising:
   a first electrochemical cell including a first electrode, a second electrode, and a solid oxide electrolyte, the first electrode exposed to an atmosphere containing a material containing a hydrogen atom, the second electrode exposed to an atmosphere containing a material containing oxygen, and the solid oxide electrolyte disposed between the first electrode and the second electrode;
   a second electrochemical cell including a first electrode, a second electrode, and a solid oxide electrolyte, the first electrode exposed to an atmosphere containing a material containing a hydrogen atom, the second electrode exposed to an atmosphere containing a material containing oxygen, and the solid oxide electrolyte disposed between the first electrode and the second electrode; and
   the interconnector according to clause 1 disposed between the second electrode of the first electrochemical cell and the first electrode of the second electrochemical cell so as to electrically connect the second electrode of the first electrochemical cell and the first electrode of the second electrochemical cell,
   wherein the protective film of the interconnector is disposed on the second electrode side of the first electrochemical cell.
15. The solid oxide electrochemical cell stack according to clause 14, further including a third electrochemical cell.
16. The solid oxide electrochemical cell stack according to clause 14, wherein
   the interlayer includes a material containing an element with a larger self-diffusion coefficient than a self-diffusion coefficient of the iron and the chromium in the metal base.
17. The solid oxide electrochemical cell stack according to clause 16, wherein
   the self-diffusion coefficient of the element in the interlayer is one or more orders of magnitude larger than the self-diffusion coefficient of the iron and the chromium in the metal base.
18. The solid oxide electrochemical cell stack according to clause 16, wherein
   the interconnector includes the material with a smaller Young's modulus than a Young's modulus of the metal base.
19. The solid oxide electrochemical cell stack according to clause 16, wherein
   the interlayer includes a metal material containing at least a metal element selected from the group consisting of Cu, Au, and Ag.
20. The solid oxide electrochemical cell stack of clause 14, wherein
   the interlayer includes a material with a smaller Young's modulus than a Young's modulus of the metal base.

## Claims

1. An interconnector for a solid oxide electrochemical cell stack, the interconnector comprising:
a metal base including an iron-base alloy containing chromium;
a protective film disposed on a surface of the metal base; and
an interlayer disposed between the metal base and the protective film arranged to relieve stress.

2. The interconnector according to claim 1, wherein
the interlayer includes a material containing an element with a larger self-diffusion coefficient than a self-diffusion coefficient of the iron and the chromium in the metal base.

3. The interconnector according to claim 2, wherein
the self-diffusion coefficient of the element in the interlayer is one or more orders of magnitude larger than the self-diffusion coefficient of the iron and the chromium in the metal base.

4. The interconnector according to claim 2, wherein
the interconnector includes the material with a smaller Young's modulus than a Young's modulus of the metal base.

5. The interconnector according to claim 2, wherein
the interlayer includes a metal material containing at least a metal element selected from the group consisting of Cu, Au, and Ag.

6. The interconnector according to claim 1, wherein
the interlayer includes a material with a smaller Young's modulus than a Young's modulus of the metal base.

7. The interconnector according to claim 6, wherein
the interlayer includes a metal material containing at least a metal element selected from the group consisting of Mg, Al, Cu, Pd, Au, Ag, Zn, and Ti.

8. The interconnector according to claim 1, further comprising
at least one wrinkle on a surface of the interlayer.

9. The interconnector according to claim 1, wherein
the protective film includes an oxide containing at least one selected from the group consisting of Co, Ni, Mn, Cu, Fe, Cr, and Zn.

10. The interconnector according to claim 1, wherein
the protective film includes at least one selected from the group consisting of a spinel oxide containing Co and a perovskite oxide containing at least one selected from the group consisting of Co, La, and Sr.

11. The interconnector according to claim 1, wherein
a thickness of the interlayer is from 0.3 *µ*m to 10 *µ*m.

12. The interconnector according to claim 1, wherein
a thickness of the protective film is from 0.3 *µ*m to 20 *µ*m.

13. The interconnector according to claim 1, wherein the protective film is disposed on a first surface of the metal base and on a second surface of the metal base, the second surface being opposite to the first surface.

14. A solid oxide electrochemical cell stack comprising:
a first electrochemical cell including a first electrode, a second electrode, and a solid oxide electrolyte, the first electrode exposed to an atmosphere containing a material containing a hydrogen atom, the second electrode exposed to an atmosphere containing a material containing oxygen, and the solid oxide electrolyte disposed between the first electrode and the second electrode;
a second electrochemical cell including a first electrode, a second electrode, and a solid oxide electrolyte, the first electrode exposed to an atmosphere containing a material containing a hydrogen atom, the second electrode exposed to an atmosphere containing a material containing oxygen, and the solid oxide electrolyte disposed between the first electrode and the second electrode; and
the interconnector according to claim 1 disposed between the second electrode of the first electrochemical cell and the first electrode of the second electrochemical cell so as to electrically connect the second electrode of the first electrochemical cell and the first electrode of the second electrochemical cell,
wherein the protective film of the interconnector is disposed on the second electrode side of the first electrochemical cell.

15. The solid oxide electrochemical cell stack according to claim 14, further including a third electrochemical cell.

16. The solid oxide electrochemical cell stack according to claim 14, wherein
the interlayer includes a material containing an element with a larger self-diffusion coefficient than a self-diffusion coefficient of the iron and the chromium in the metal base.

17. The solid oxide electrochemical cell stack according to claim 16, wherein
the self-diffusion coefficient of the element in the interlayer is one or more orders of magnitude larger than the self-diffusion coefficient of the iron and the chromium in the metal base.

18. The solid oxide electrochemical cell stack according to claim 16, wherein
the interconnector includes the material with a smaller Young's modulus than a Young's modulus of the metal base.

19. The solid oxide electrochemical cell stack according to claim 16, wherein
the interlayer includes a metal material containing at least a metal element selected from the group consisting of Cu, Au, and Ag.

20. The solid oxide electrochemical cell stack of claim 14, wherein
the interlayer includes a material with a smaller Young's modulus than a Young's modulus of the metal base.
